# EUROPÄISCHE PATENTSCHRIFT

(11) **EP 3 573 878 B1**
(45) Veröffentlichungstag und Bekanntmachung des Hinweises auf die Patenterteilung: **11.11.2020**
(21) Anmeldenummer: 17724806.9
(22) Anmeldetag: 18.05.2017
(51) Int. Cl.: B62D 21/10, B62D 25/20, B62D 29/00

(54) **SELBSTTRAGENDE BAUGRUPPE FÜR EIN FAHRZEUG**
SELF-SUPPORTING ASSEMBLY FOR A VEHICLE
ENSEMBLE AUTO-PORTEUR POUR VÉHICULE

(43) Veröffentlichungstag der Anmeldung: 04.12.2019
(73) Patentinhaber: Otto Fuchs - Kommanditgesellschaft -, 58540 Meinerzhagen (DE)
(72) Erfinder: THOMZICK, Gerd, 51709 Marienheide (DE); GLANEMANN, Martin, 58540 Meinerzhagen (DE); RICKFELDER, Guido, 58540 Meinerzhagen (DE)
(74) Vertreter: Haverkamp, Jens
(86) Internationale Anmeldenummer: PCT/EP2017/061986
(87) Internationale Veröffentlichungsnummer: WO 2018/210423

(56) Entgegenhaltungen:
- EP-A1- 1 440 832
- CN-A- 106 184 414
- DE-B3-102012 108 588
- GB-A- 2 541 203
- US-B1- 9 493 190

## Beschreibung

Die Erfindung betrifft eine selbsttragende Bodengruppe für ein Fahrzeug.

Die Bodengruppe eines Fahrzeuges ist typischerweise in Rahmenbauweise erstellt. Eine solche Bodengruppe umfasst zwei Längsträger, die durch zwei Querträger miteinander verbunden sind. Zum Teil sind die Längsträger auch durch Hilfsrahmen miteinander in Querrichtung des Fahrzeuges verbunden. Der karosserieseitige Boden des Fahrzeuges befindet sich oberhalb dieser Baugruppe.

Fahrzeuge mit Elektroantrieb benötigen Batterien als Energiequelle zum Speisen des oder der Elektromotoren. Die Batterien sind in einem Batteriemodul zusammengefasst, insbesondere auch vor dem Hintergrund, dass dann eine Auswechselbarkeit erleichtert ist. Aufgrund der typischerweise relativ großen Anzahl der benötigten Batterien sind derartige Batteriemodule relativ groß und haben ein entsprechend hohes Gewicht. Diese werden daher an den Fahrzeugträgern angebracht. Aufgrund der gewünschten Zugänglichkeit zu den Batterien eines solchen Batteriemoduls finden sich diese typischerweise unterhalb der Fahrzeugträger, was sich mitunter ungünstig auf die Bodenfreiheit des Fahrzeuges auswirkt.

Aus EP 1 440 332 A1 ist eine Bodengruppe für ein Elektrofahrzeug bekannt. Die Bodengruppe verfügt endseitig jeweils über ein Rahmenbauteil, an dem die Ränder des Fahrzeuges angeschlossen sind. Diese Rahmenbauteile sind durch eine Bodengruppe miteinander verbunden. Die Bodengruppe selbst verfügt über einen zentralen Träger, der der Längserstreckung des Fahrzeuges folgt. An diesen sind in Querrichtung des Fahrzeuges zu beiden Seiten Aufnahmekammern für Batteriemodule angebracht. Dieser Teil der Bodengruppe ist aus U-Profilen zusammengesetzt, wobei die längsseitige Öffnung jedes U-Profils mit dem Boden des benachbarten U-Profils verschweißt ist. Das randlich letzte Profil ist als geschlossenes Kastenprofil ausgeführt.

Aus GB 2 541 403 A1 ist eine Vorrichtung zum Tragen einer Batterie bekannt. Diese Vorrichtung weist integrierte Kühlkanäle auf. Dieses Batteriegehäuse umfasst ein wannenartiges Unterteil und einen Deckel. Hierbei handelt es sich allerdings nicht um eine selbsttragende Bodengruppe für ein Fahrzeug.

US 9,493,190 B1 offenbart eine Schutzeinrichtung für ein Fahrzeug zum Dämpfen eines Seitenaufpralls. Diese Schutzeinrichtung ist aus mehreren, nach unten offenen U-förmigen Profilen zusammengesetzt. Durch diese ist keine Nutzkammer ausgebildet. Somit offenbart dieser Stand der Technik keine selbsttragende Bodengruppe für ein Fahrzeug.

Ausgehend von diesem diskutierten Stand der Technik liegt der Erfindung daher die Aufgabe zugrunde, eine selbsttragende Bodengruppe für ein Fahrzeug vorzuschlagen, mit der eine Unterbringung von für den Betrieb eines Fahrzeuges notwendigen Aggregaten, insbesondere von Batterien, unter Vermeidung der zu im Stand der Technik aufgezeigten Nachteile möglich ist.

Gelöst wird diese Aufgabe erfindungsgemäß durch eine selbsttragende Bodengruppe für ein Fahrzeug, umfassend eine Mehrzahl von längsseitig miteinander durch ein Kaltfügeverfahren form- und kraftschlüssig miteinander verbundenen, jeweils einen Obergurt und einen damit durch Stege verbundenen Untergurt aufweisenden Leichtmetallhohlkammerstrangpressprofilen, wobei aneinandergrenzende Profile an den längsseitigen Enden des Obergurtes und des Untergurtes komplementär zueinander ausgeführte Verbindungsglieder - Nutleisten und Stegleisten - aufweisen und durch die miteinander in Eingriff gestellten Verbindungsglieder der miteinander durch das Kaltfügeverfahren zum Ausbilden einer Bodenplatte verbunden sind, von welchen Profilen zumindest eine Mehrzahl zwischen ihrem Obergurt und ihrem Untergurt wenigstens eine Nutzkammer zum Unterbringen zumindest eines für einen Betrieb des Fahrzeuges notwendigen Aggregates aufweisen, und an jeder die Stirnseiten der Profile aufweisenden Längsseite jeweils einen sich über die Länge der durch die Profile gebildeten Bodenplatte erstreckenden und sich an den Stirnflächen der Profile abstützenden Schweller.

Bei dieser selbsttragenden Fahrzeugbodengruppe ist der Raum zum Unterbringen von Batterien oder auch anderen, für den Betrieb eines Fahrzeuges notwendigen Aggregaten, nicht in einem zusätzlichen Modul vorgesehen, sondern in die Fahrzeugbodengruppe integriert. Dieses wird dadurch erreicht, dass die Bodengruppe selbsttragend ist und Nutzkammern bereitgestellt sind, in denen für einen Betrieb des Fahrzeuges notwendige Aggregate, wie beispielsweise Batterien untergebracht sind bzw. untergebracht werden können. Die selbsttragende Bodengruppe umfasst eine Bodenplatte, die durch eine Mehrzahl von Leichtmetallstrangpressprofilen zusammengesetzt ist. Diese Profile sind längsseitig miteinander durch ein Fügeverfahren miteinander verbunden. Zum Fügen zweier benachbarter Strangpressprofile bietet sich ein Kaltfügeverfahren an, mit dem die miteinander in Eingriff gestellten Verbindungsglieder form- und kraftschlüssig miteinander verbunden werden. Die Profile weisen jeweils einen Obergurt und einen damit durch Stege verbundenen Untergurt auf. Insofern stellt jedes Profil für sich genommen ein Kastenprofil dar, welches auch als mehrkammeriges Hohlprofil ausgeführt sein kann. Verbunden sind zwei aneinandergrenzende Strangpressprofile durch das Fügeverfahren mit ihren Obergurten und mit ihren Untergurten. Zum Zwecke einer Verbindung zweier Strangpressprofile mittels eines Kaltfügeverfahrens weisen die längsseitigen Enden des Obergurtes und des Untergurtes komplementär mit zueinander ausgeführte Verbindungsglieder, wie beispielsweise Nutleisten - einerseits - und Stegleisten - andererseits - auf. In die geöffneten Nutleisten wird für die gewünschte Verbindung eine Stegleiste eingesetzt. Die Querschnittsgeometrie dieser miteinander in Eingriff gestellten Verbindungsglieder bedingt die Formschlüssigkeit der Verbindung nach dem Kaltfügeprozess. Sind zwei aneinandergrenzende Profile mit ihren komplementären Verbindungselementen zusammengesetzt, werden die Nutleisten verpresst, durch welchen Vorgang die darin eingesetzte Stegleiste in der Nutleiste verklammert wird. Durch ein solches Kaltfügeverfahren ist die Verbindung zweier aneinandergrenzender Profile nicht nur form- und kraftschlüssig, sondern auch spielfrei und unlösbar. Der Obergurt ist mit dem Untergurt eines jeden Strangpressprofils durch zumindest zwei Stege verbunden. Aufgrund des Abstandes des Obergurtes von dem Untergurt ist die Bodenplatte dieser selbsttragenden Bodengruppe besonders belastbar. Durch diese Kastenbauweise lassen sich die gewünschten Festigkeitseigenschaften auch bei relativ dünner Wandstärke der Strangpressprofile erreichen, was sich positiv auf ein möglichst geringes Gewicht auswirkt. Zudem wird durch den Abstand des Obergurtes von dem Untergurt zumindest bei einer Mehrzahl der eingesetzten Strangpressprofile jeweils zumindest eine Nutzkammer bereitgestellt. Die Nutzkammern dienen zum Unterbringen von für den Betrieb des Fahrzeuges notwendigen Aggregaten, wie etwa von Batterien. Damit sind diese in die Bodengruppe integriert und benötigen keine zusätzliche Halterung oder Module. Erreicht wird mit diesem Konzept auch, dass durch das Unterbringen von beispielsweise Batterien in diesen Nutzkammern der Bodengruppe das mit einer solchen Bodengruppe ausgerüstete Fahrzeug aufgrund des Gewichtes der Batterien einen relativ tiefliegenden Schwerpunkt aufweist. Dieses wirkt sich positiv auf das Fahrverhalten und die Fahrsicherheit aus.

Typischerweise ist vorgesehen, dass die Längserstreckung die die Bodenplatte bildenden Strangpressprofile quer zur Längserstreckung des Fahrzeuges verläuft. Eine Zugänglichkeit zu dem Nutzraum ist dann von den Seiten des Fahrzeuges möglich. Die Bodenplatte dieser selbsttragenen Bodengruppe kann sich prinzipiell auf der gesamten Länge des Fahrzeuges zwischen den Vorderrädern und den Hinterrädern erstrecken. Es ist durchaus auch möglich, nur einen Teil dieses Abstandes durch eine solche Bodengruppe zu überbrücken oder diese auch über die Vorder- und/oder Hinterräder weiterlaufen zu lassen. Durchaus möglich ist es auch, dass die Strangpressprofile sich in Längserstreckung des Fahrzeuges erstrecken.

An den die offenen Stirnseiten der Profile aufweisende Längsseiten der Bodenplatte sind Schweller angeschlossen, die sich an den Stirnflächen der Profile abstützen. Somit bilden die Schweller bei einer Bodenplatte, bei der die Längserstreckung der Strangpressprofile quer zur Längserstreckung des Fahrzeuges verläuft, den seitlichen Abschluss der selbsttragenden Bodengruppe. Die Schweller stützen sich direkt oder auch unter Zwischenschaltung weiterer Elemente an den Stirnflächen der Strangpressprofile der Bodenplatte ab. Typischerweise befindet sich zwischen der Rückseite des Schwellers und den Stirnseiten der Profile eine Dichtung oder Dichtungsanordnung. Zumindest einer der beiden Schweller ist, um eine Zugänglichkeit zu den Nutzkammern der Profile zu gewährleisten, von der Bodenplatte entfernbar oder in geeigneter Weise gegenüber dieser verstellbar. Ersteres lässt sich beispielsweise dadurch erreichen, dass der Schweller mit der Bodenplatte verschraubt ist. Hierzu können in den Strangpressprofilen vorbereitete Schraubkanäle genutzt werden. Im letzteren Fall kann der Schweller mit einer seiner Längsseiten schwenkbar an der Bodenplatte angeschlossen sein, so dass nach Aufschwenken des Schwellers die Nutzkammern der Profile stirnseitig zugänglich sind. Vorteilhaft an der Kammerung der Bodenplatte durch die nebeneinander angeordneten Strangpressprofile ist, dass jede Nutzkammer einzeln zugänglich ist, was wiederum den Austausch eines darin befindlichen Aggregates, beispielsweise einer Batterie oder eines Batteriemoduls gegenüber Anordnungen vereinfacht, bei denen eine Vielzahl von Batterien zu einer gegenständlichen Einheit zusammengeschlossen sind.

Typischerweise wird man die Schweller auch zum Schutze der in den Nutzkammern befindlichen Aggregate als Crashelemente auslegen. Sodann sind die in der Bodenplatte enthaltenen Batterien oder auch andere für den Betrieb des Fahrzeuges darin angeordnete Aggregate gegenüber einem Aufprall geschützt. Da sich die Schweller typischerweise an den quer zur Fahrtrichtung befindlichen Seiten der Bodengruppe befinden, schützen diese die in den Nutzkammern angeordneten Aggregate vor einem Seitenaufprall. Die Wirksamkeit eines als Crashelement ausgelegten Schwellers ist bei dieser Bodengruppe besonders wirksam, da sich der Schweller mit seiner Rückseite an den Stirnseiten der die Bodenplatte bildenden Profile abstützt, wodurch die Bodenplatte ein entgegen der Aufprallrichtung extrem stabiles Widerlager bereitstellt. Aufprallenergie wird somit zumindest bis zu einem gewissen Grad allein durch den Schweller und seine Deformationsarbeit aufgefangen. Damit sind die in den Nutzkammern der Bodenplatte enthaltenen und für den Betrieb eines Fahrzeuges notwendigen Aggregate, wie beispielsweise Batterien, besonders wirksam gegenüber Beschädigungen geschützt.

Infolge des typischerweise abgedichteten Abschlusses der Nutzkammern an ihren Stirnseiten ist gerade bei einer Bestückung der Nutzkammern mit Batterien ohne zusätzliche Maßnahmen eine Brandschutzdichtigkeit gewährleistet. Im Falle eines Batteriebrandes kann sich dieser durch die Kapselung der Batterien in den voneinander beabstandeten Nutzkammern nicht ausbreiten. Vielmehr wird dieser aufgrund des in einer Nutzkammer nur im geringen Umfange vorhandenen Sauerstoffs rasch ersticken.

Mit einer solchen selbsttragenden Bodengruppe kann auf eine Rahmenbauweise für die Bodengruppe verzichtet werden. Vielmehr kann diese Bodengruppe einen herkömmlich als notwendig erachteten, die tragende Struktur bildende Rahmen ersetzen. An diese selbsttragende Bodengruppe können weitere Fahrzeugkomponenten, wie etwa Radaufhängungen, eine Lenkeinrichtung, Achsträger oder dergleichen angeschlossen werden. Insofern geht mit der Verwendung einer solchen Bodengruppe in einem Fahrzeug trotz Vorsehens der Möglichkeit einer Unterbringung von einer Vielzahl von Batterien eine Gewichtsreduzierung gegenüber herkömmlichen Batteriemodulen einher. Dieses ist gerade bei der Konzeption von Fahrzeugen mit Elektroantrieb ein entscheidender Vorteil. Zudem kann eine solche Bodengruppe genutzt werden, um daran auch andere Fahrzeugteile zu verankern, beispielsweise die Sitze. In einem solchen Fall können Sitzschienen an der oberen Deckplatte der Bodengruppe angebracht sein. Ebenso eignet sich die Bodenplatte einer solchen Bodengruppe zum Trage eines Unterfahrschutzes. Ein solcher Unterfahrschutz kann beispielsweise an der durch die Untergurte der Profile gebildeten unteren Deckplatte angeschlossen werden. Ein Unterfahrschutz kann auch durch die seitlichen Schweller bereitgestellt werden, die sich dann über den unteren Abschluss der Bodenplatte hinweg nach unten erstrecken.

Die Bodenplatte, bei der der Längsverlauf der Strangpressprofile quer zur Längserstreckung des Fahrzeuges orientiert ist, kann den Bedürfnissen entsprechend länger oder kürzer ausgeführt sein. Bei längeren Bodenplatten wird man die Anzahl der durch das Fügeverfahren miteinander verbundenen Strangpressprofile erhöhen. Dieses ist, ohne zusätzliche Werkzeuge zu benötigen, bei der Herstellung unterschiedlicher Bodenplatten von Vorteil. Die miteinander verbundenen Strangpressprofile müssen nicht identisch sein. Wesentlich ist, dass diese die notwendigen Verbindungsmittel an ihrem Obergurt und ihrem Untergurt in dem relevanten Abstand aufweisen. Durchaus möglich ist es, dass Profile im Querschnitt eine Krümmung aufweisen, beispielsweise, wenn sich die Bodengruppe über eine darunter befindliche Achse hinweg erstrecken soll. Auch muss die Breite der Bodengruppe und insbesondere der Bodenplatte in ihrer Erstreckung quer zur Längserstreckung des Fahrzeuges nicht konstant sein. Es ist durchaus möglich, dass, sollte sich eine solche Bodengruppe bis in den Bereich der gelenkten Vorderräder erstrecken, diese im Bereich der Vorderräder schmaler ausgeführt ist. Typischerweise wird man in diesen Abschnitten der Bodengruppe die Kammerung der Profile nicht unbedingt zum Unterbringen von Batterien nutzen, da an diesen Stellen eine Zugänglichkeit erschwert ist. Gleichwohl können diese Nutzkammern zum Unterbringen anderer, insbesondere wartungsfreier Aggregate genutzt werden.

Insofern wird durch die selbsttragende Bodengruppe ein gekammerter Boden bereitgestellt, dessen Hohlraum zum Unterbringen von insbesondere für den Betrieb eines Fahrzeuges notwendigen Aggregaten genutzt werden kann. Durch die Kammerung der Strangpressprofile ist der in der Bodengruppe bereitgestellte Hohlraum ebenfalls gekammert, sodass eine gesonderte Unterteilung zum Abgrenzen bzw. Beanstanden einzelner Aggregate nicht erforderlich ist.

Die Strangpressprofile sind vorzugsweise aus einer geeigneten Aluminiumlegierung hergestellt. Gleiches gilt für die Schweller.

Eine solche selbsttragende Bodengruppe kann durchaus auch durch eine Stapelung von zumindest zwei derartiger Bodengruppen bereitgestellt werden.

Nachfolgend ist die Erfindung anhand von Ausführungsbeispielen unter Bezugnahme auf die beigefügten Figuren beschrieben. Es zeigen:
- **Fig. 1:**: eine schematisierte perspektivische und zum Teil geschnittene Ansicht einer selbsttragenden Bodengruppe eines Fahrzeuges,
- **Fig. 2:**: eine stirnseitige Ansicht eines Abschnittes der Bodenplatte der Bodengruppe der Figur 1 mit abgenommenem Schweller,
- **Fig. 3:**: ein Ausschnitt einer Bodenplatte einer selbsttragenden Bodengruppe unter Verwendung von Profilen gemäß einer weiteren Ausgestaltung und
- **Fig. 4:**: eine Stirnseitenansicht eines Schwellers der Bodengruppe der Figur 1.

Eine selbsttragende Bodengruppe 1 für ein Fahrzeug ist aus einer Mehrzahl längsseitig miteinander verbundener einzelner Strangpressprofile 2 hergestellt. Die Strangpressprofile 2 sind aus einer Leichtmetalllegierung stranggepresst worden. Bei dem dargestellten Ausführungsbeispiel sind die Strangpressprofile 2 aus einer Aluminiumlegierung hergestellt. Die für die Herstellung der Strangpressprofile 2 eingesetzte Aluminiumlegierung ist eine solche, damit die Strangpressprofile 2 eine hinreichende Festigkeit aufweisen. Geeignet sind beispielsweise Aluminiumlegierungen aus der 6000er-Gruppe gemäß der Einteilung der Aluminum Association. Die Strangpressprofile 2 sowie ihre Verbindung sind weiter unten beschrieben.

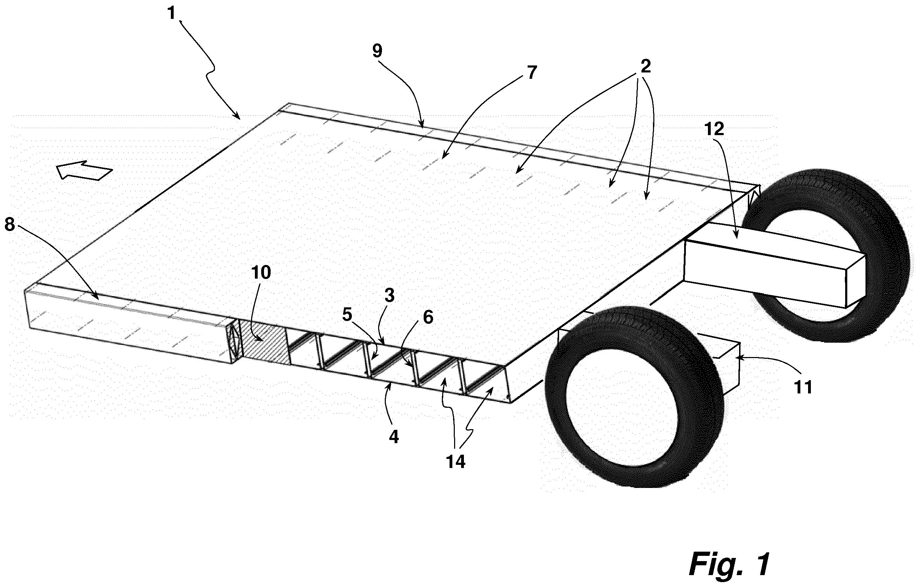

Die Strangpressprofile 2 sind bezüglich ihrer Längserstreckung quer zur Längsachse des Fahrzeuges, in welches die Bodengruppe 1 eingebaut ist, ausgerichtet. Die Längserstreckung des Fahrzeuges und somit seine Fahrtrichtung (Vorwärtsfahrt) ist in Figur 1 mit einem Blockpfeil kenntlich gemacht. Jedes Strangpressprofil 2 verfügt über einen Obergurt 3, einen Untergurt 4, welche beiden Gurte 3, 4 jeweils durch zwei voneinander beanstandete Stege 5, 6 miteinander verbunden sind. Die mit ihren Längsseiten miteinander verbundenen Profile 2 bilden eine Bodenplatte 7. Es versteht sich, dass die Länge der Bodenplatte 7 in Längserstreckung des Fahrzeuges ohne Weiteres durch Vorsehen von mehr oder weniger Strangpressprofilen zum Ausbilden der Bodenplatte 7 an die gewünschte Dimensionierung angepasst werden kann. Die Breite der Bodenplatte 7 wird durch die jeweilige Länge der miteinander längsseitig verbundenen Strangpressprofile 2 definiert.

Die aufgrund ihrer vorbeschriebenen Konzeption als Hohlkammerprofile ausgebildeten Strangpressprofile 2 sind an ihren quer zur Fahrtrichtung weisenden Stirnseiten offen. Zum Verschluss dieser Stirnseiten der Bodenplatte 7 dient jeweils ein Schweller 8, 9. Der Schweller 8 ist in Figur 1 nur in einem Abschnitt gezeigt, um die stirnseitige Ausbildung einer Seite der Bodenplatte 7 und den Einblick in die stirnseitig offenen Profile 2 zu erlauben. Die Schweller 8, 9 sind ebenfalls Strangpressprofile aus einer Aluminiumlegierung. Die Schweller 8, 9 sind als Crashelemente ausgelegt und aus einer diesbezüglich geeigneten und sich von der Legierung zum Herstellen der Profile 2 unterschiedlichen Aluminiumlegierung hergestellt. Bei dem dargestellten Ausführungsbeispiel sind die Schweller 8, 9 stirnseitig unter Zwischenschaltung einer Dichtung 10 mit den Strangpressprofilen 2 verschraubt. Die Verschraubung der Schweller 8, 9 mit den Stirnflächen der Bodenplatte 7 ist lösbar, um auf diese Weise einen Zugang zu den Hohlkammern der Profile 2 zu ermöglichen.

Die Bodengruppe 1 ist integraler Bestandteil des tragenden Chassis eines Fahrzeuges. Um dieses zu verdeutlichen, sind an die rückwärtige Stirnseite der Bodengruppe 1 zwei Längsstreben 11, 12 angebracht, die jeweils ein Rad tragen. In gleicher Weise können an die Bodengruppe 1 gelenkige Radaufhängungen, die vorderen gelenkten Räder, eine Lenkeinrichtung und dergleichen angeschlossen werden.

Von besonderem Vorteil bei der Bodengruppe 1 ist, dass die Bodenplatte aufgrund des Einsatzes der Profile 2 eine Vielzahl von Nutzkammern aufweist. Bei dem dargestellten Ausführungsbeispiel wird dieser werden diese genutzt, um in diese Batterien zu integrieren. Diese dienen als Energiespeicher für das als Elektrofahrzeug ausgelegte Fahrzeug, in welches die Bodengruppe 1 eingebaut ist. Aufgrund der Lösbarkeit zumindest des Schwellers 8 besteht auch im eingebauten Zustand der Bodengruppe 1 in einem Fahrzeug eine Zugänglichkeit zu den in den Nutzkammern aufgenommenen Batterien. Die Bodenplatte 7 kann an geeigneter Stelle einen durch eine Nut darin eingebrachten Leitungsführungskanal zum Verbinden der in den Nutzkammern befindlichen Batterien mit einer zentralen Energieversorgungseinheit, über die eine Stromentnahme und das Laden der Batterien gesteuert wird, aufweisen. Durchaus möglich ist es auch, den Hohlraum des oder der Schweller als Leitungsführungskanal für die vorgenannten Zwecke zu nutzen.

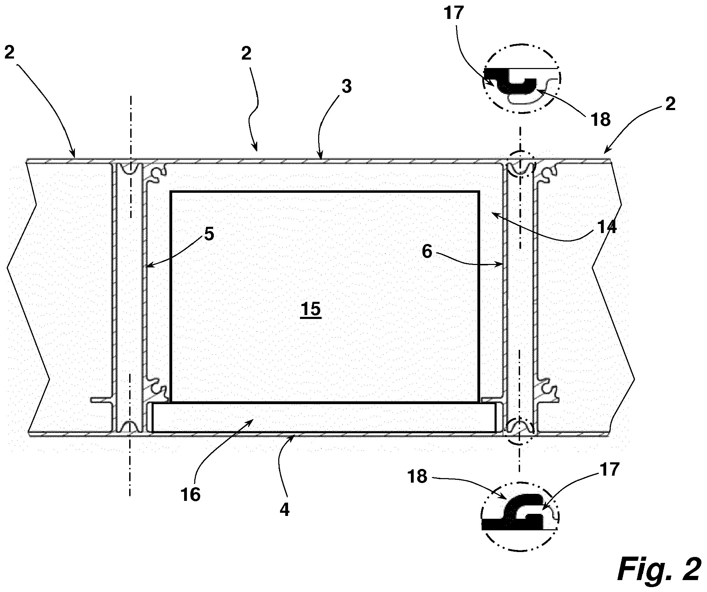

Figur 2 zeigt eine vergrößerte stirnseitige Ansicht eines Profils 2 der Figur 1. Die Stabilität des Profils 2 und damit der Bodenplatte 7 bezüglich einer Gewichtsbelastung kann über die Höhe der Stege 5, 6 und/oder die Materialstärke eingestellt werden. Die Nutzkammer 14 des Profils 2 ist bei diesem Ausführungsbeispiel durch den Obergurt 3, den Untergurt 4 und die beiden Stege 5, 6 eingefasst. In dieser Figur ist die Stirnseite einer in die Nutzkammer 14 eingesetzten Batterie dargestellt. Unterhalb der Batterie 15 befindet sich in der Nutzkammer 14 ein sich über die Längserstreckung des Profils 2 erstreckender flexibler Schlauch 16 mit rechteckiger Querschnittsgeometrie. Der Schlauch 16 ist in nicht näher dargestellter Art und Weise zwischen dem jeweiligen Schweller 8, 9 und den Stirnseiten der Bodenplatte 7 mit jeweils einem Sammler verbunden, die in einen Kühlmittelkreislauf eingebunden sind. Somit ist der Schlauch 16 kühlmitteldurchströmt und dient zum Kühlen der satt auf dem Schlauch 16 mit ihrer Unterseite aufliegenden Batterie 15. Das Gewicht der Batterie 15, mit dem diese auf dem Schlauch 16 aufliegt, begünstigt einen Wärmeübergang und somit die Effektivität der Kühlung.

Figur 2 zeigt nur beispielhaft den Einsatz eines flexiblen Schlauches 16 zum Bereitstellen einer Kühlung. Anstelle eines flexiblen Schlauches kann auch ein beispielsweise aus Aluminium gefertigter Kühlkanal in die Nutzkammer 14 eingesetzt sein. Bei dem dargestellten Ausführungsbeispiel wird das Gewicht der Batterie 15 ausgenutzt, um einen guten und dauerhaften Wärmeübergang von der Batterie 15 auf den Schlauch 16 zu gewährleisten. Eine Kühlung der Batterie kann jedoch auch an anderer Stelle erfolgen. Möglich ist auch eine Kühlung, bei der die Nutzkammer 14 von einem kühlenden Luftstrom durchströmt wird.

Die Profile 2 sind jeweils mit ihrem Obergurt 3 und mit ihrem Untergurt 4 längsseitig miteinander verbunden. Hierzu trägt jedes Profil 2 an den Enden seiner Gurte 3, 4 komplementäre Verbindungsglieder. Bei dem dargestellten Ausführungsbeispiel trägt der Obergurt 3 an seinem in Figur 2 gezeigten rechten Ende eine Stegleiste 17, während das benachbarte Profil 2 an komplementärer Stelle eine Nutleiste 18 aufweist, wie aus der vergrößerten Darstellung der Verbindungsstellen erkennbar ist. An den Untergurten 4 der aneinandergrenzenden Profile 2 sind dieselben Verbindungsglieder angeordnet, jedoch in entgegengesetzter Orientierung. Die miteinander in Eingriff gestellten Verbindungsglieder 17, 18 werden bei geöffneter Nutenleiste 18 zunächst lose miteinander in Eingriff gestellt und anschließend gegeneinander verpresst, was mit einer plastischen Deformation zumindest der Nutenleiste 18 und in vielen Fällen auch der darin aufgenommenen Stegleiste 17 einhergeht. Im Zuge dieses Kaltfügeverfahrens werden die Verbindungsglieder 17, 18 miteinander innig verpresst, so dass auf diese Weise eine formschlüssige, spielfreie und unlösbare Verbindung bereitgestellt ist. Aufgrund des Formschlusses werden Zug- oder Schubbelastungen der auf diese Weise verbundenen Gurte 3, 4 von dem einen Profil 2 auf das angrenzende Profil 2 übertragen, und zwar ohne dass die Verbindungsstellen eine diesbezügliche Schwachstelle darstellen.

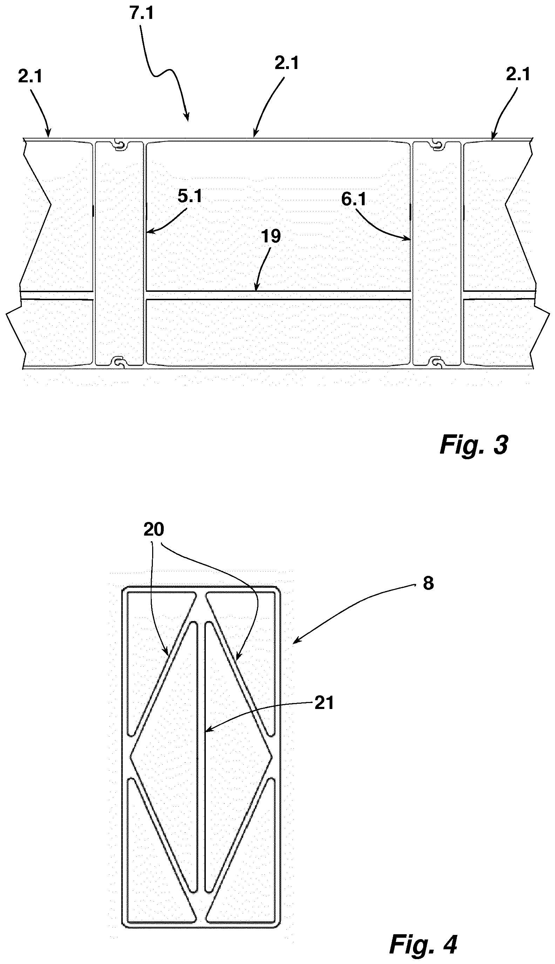

Figur 3 zeigt einen Ausschnitt entsprechend demjenigen der Figur 2 einer weiteren Bodenplatte 7.1 einer selbsttragenden Bodengruppe. Die Profile 2.1 dieser Bodenplatte 7.1 sind prinzipiell aufgebaut wie die Strangpressprofile 2 des vorstehend beschriebenen Ausführungsbeispiels. Daher gelten die diesbezüglichen Ausführungen ebenfalls für die Strangpressprofile 2.1. Die Strangpressprofile 2.1 sind als Mehrkammerprofile ausgeführt, indem zwischen den Stegen 5.1, 6.1 ein Boden 19 ausgebildet ist. Bei dem dargestellten Ausführungsbeispiel dient der Boden 19 zum Tragen einer Batterie, die sodann auf diesem Boden 19 aufliegt. Die unterhalb des Bodens 19 befindliche Kammer kann von einem Kühlmittel durchströmt sein. Bei diesem Ausführungsbeispiel ist der Einsatz eines Kühlmittelschlauches nicht erforderlich. Die Kühlmittelwegsamkeit wird durch die unterhalb des Bodens 19 befindliche Kammer bereitgestellt. Bei diesem Ausführungsbeispiel macht man sich zudem die Wärme gut leitenden Eigenschaften der Aluminiumlegierung, aus der die Strangpressprofile 2.1 gepresst sind, zunutze. Auch bei diesem Ausführungsbeispiel sind an die unteren Kanäle der Profile 2.1 an ihren stirnseitigen Abschlüssen Sammler angeordnet, die wiederum in einen Kühlmittelkreislauf eingebunden sind.

Da die Profile 2 bzw. 2.1 zum Ausbilden der jeweiligen Bodenplatte 7 bzw. 7.1 Strangpressprofile sind, ist es ohne Weiteres möglich, diese auch mit Kühlrippen auszustatten, sodass eine passive Kühlung von in den Nutzkammern aufgenommene Batterien möglich ist. Es versteht sich, dass auch eine kombinierte Kühlung aus aktiver und passiver Kühlung möglich ist.

Figur 4 zeigt eine Stirnseitenansicht des Schwellers 8. Der Schweller 8 weist eine Kammerung auf, die durch geneigt verlaufende Stege 20 gebildet ist. Die geneigte Ausrichtung der Stege 20 unterstützt die dem Schweller 8 zugeordnete Funktionalität eines Crashelementes zum Auffangen eines seitlichen Aufpralls, der auf die Langseite auftreffen würde. Ein vertikal ausgerichteter mittlerer Steg 21 dient zur Stabilisierung des Schwellers 8 in vertikaler Richtung.

Die Erfindung ist anhand von Ausführungsbeispielen beschrieben worden.

Ohne den Umfang der geltenden Ansprüche zu verlassen, ergeben sich für einen Fachmann zahlreiche weitere Ausgestaltungen, die Erfindung umzusetzen.

### Bezugszeichenliste

- 1: Bodengruppe
- 2,2.1: Strangpressprofil
- 3: Obergurt
- 4: Untergurt
- 5,5.1: Steg
- 6,6.1: Steg
- 7,7.1: Bodenplatte
- 8: Schweller
- 9: Schweller
- 10: Dichtung
- 11: Längsstreb
- 12: Längsstreb
- 14: Nutzkammer
- 15: Batterie
- 16: Schlauch
- 17: Stegleiste
- 18: Nutleiste
- 19: Boden
- 20: Steg
- 21: Steg

## Patentansprüche

1. Selbsttragende Bodengruppe für ein Fahrzeug, umfassend eine Mehrzahl von längsseitig miteinander durch ein Kaltfügeverfahren form- und kraftschlüssig miteinander verbundenen, jeweils einen Obergurt (3) und einen damit durch Stege (5, 6; 5.1, 6.1) verbundenen Untergurt (4) aufweisenden Leichtmetallhohlkammerstrangpressprofilen (2, 2.1), wobei aneinandergrenzende Profile (2, 2.1) an den längsseitigen Enden des Obergurtes (3) und des Untergurtes (4) komplementär zueinander ausgeführte Verbindungsglieder - Nutleisten (18) und Stegleisten (19) - aufweisen und durch die miteinander in Eingriff gestellten Verbindungsglieder der miteinander durch das Kaltfügeverfahren zum Ausbilden einer Bodenplatte (7, 7.1) verbunden sind, von welchen Profilen (2, 2.1) zumindest eine Mehrzahl zwischen ihrem Obergurt (3) und ihrem Untergurt (4) wenigstens eine Nutzkammer (14) zum Unterbringen zumindest eines für einen Betrieb des Fahrzeuges notwendigen Aggregates aufweisen, und an jeder die Stirnseiten der Profile (2, 2.1) aufweisenden Längsseite jeweils einen sich über die Länge der durch die Profile (2, 2.1) gebildeten Bodenplatte (7, 7.1) erstreckenden und sich an den Stirnflächen der Profile (2, 2.1) abstützenden Schweller (8, 9).

2. Bodengruppe nach Anspruch 1, **dadurch gekennzeichnet, dass** die Bodengruppe (1) Anschlussmittel zum Anschließen von weiteren Fahrzeugkomponenten, wie etwa von Radaufhängungen, einer Lenkvorrichtung und/oder von Achsträgern aufweist.

3. Bodengruppe nach Anspruch 1 oder 2, **dadurch gekennzeichnet, dass** auf dem Obergurt der Bodenplatte Sitzschienen verankert sind.

4. Bodengruppe nach einem der Ansprüche 1 bis 3, **dadurch gekennzeichnet, dass** die Bodengruppe über einen Leitungsführungskanal zur Aufnahme von in die Nutzkammern mündenden, insbesondere elektrischen Leitungen verfügt.

5. Bodengruppe nach einem der Ansprüche 1 bis 4, **dadurch gekennzeichnet, dass** die Profile (2.1) Mehrkammerprofile sind, wobei durch die Kammerung zwischen dem Obergurt (3) und dem Untergurt (4) zumindest zwei sich zwischen zwei den Obergurt (3) mit dem Untergurt (4) verbindenden Stegen (5.1, 6.1) erstreckende und durch einen Boden (19) getrennte Kammern vorgesehen sind.

6. Bodengruppe nach Anspruch 5, **dadurch gekennzeichnet, dass** eine der beiden Kammern an jedem Profilende in einen daran angeschlossenen Sammler mündet, welche Sammler an einen Kühlmittelkreislauf anschließbar sind, und die andere Kammer zur Aufnahme zumindest eines zu kühlenden Aggregates, insbesondere zumindest einer Batterie oder zumindest eines Batteriemoduls dient.

7. Bodengruppe nach einem der Ansprüche 1 bis 6, **dadurch gekennzeichnet, dass** die beiden den Obergurt mit dem Untergurt verbindenden Stege eines Profils an ihren zueinander weisenden Seiten jeweils wenigstens einen daran abragenden und mit gleichem Abstand zum Obergurt angeordneten Steg tragen.

8. Bodengruppe nach einem der Ansprüche 1 bis 7, **dadurch gekennzeichnet, dass** die Schweller (8, 9) als insbesondere aus einer Aluminiumlegierung hergestellte Crashelemente ausgelegt sind.

9. Bodengruppe nach einem der Ansprüche 1 bis 8, **dadurch gekennzeichnet, dass** zumindest einer der Schweller (8, 9) von der Bodenplatte (7, 7.1) zum Herstellen eines Zugangs zu den Nutzkammern (14) der Profile (2, 2.1) entfernbar oder gegenüber dieser verstellbar, insbesondere verschwenkbar ist.

10. Bodengruppe nach einem der Ansprüche 1 bis 9, **dadurch gekennzeichnet, dass** die Leichtmetallstrangpressprofile (2, 2.1) aus einer Aluminiumlegierung gefertigt sind.

11. Fahrzeug mit einer Bodengruppe nach einem der Ansprüche 1 bis 10, **dadurch gekennzeichnet, dass** das Fahrzeug einen Elektroantrieb aufweist und die Nutzkammern (14) der Profile (2, 2.1) mit den zum Betrieb des oder der Elektromotoren benötigten Batterien (15) ausgerüstet sind.

12. Fahrzeug nach Anspruch 11, **dadurch gekennzeichnet, dass** die in den Nutzkammern (14) aufgenommenen Batterien (15) gekühlt sind.

13. Fahrzeug nach Anspruch 12, **dadurch gekennzeichnet, dass** die Bodengruppe (1) an einen Kühlmittelkreislauf angeschlossen ist, wobei das Kühlmittel in dem Kühlmittelkreislauf durch eine elektrische Pumpe gefördert wird.

## Claims

1. Self-supporting understructure for a vehicle, comprising a plurality of light-metal hollow extruded profiles (2, 2.1) which are connected to one another on the longitudinal sides by a cold joining process in positive and frictional fit, in each case with an upper flange (3) and a lower flange (4) connected to the latter by webs (5, 6; 5.1, 6.1), wherein adjacent profiles (2, 2.1) comprise, at the longitudinal ends of the upper flange (3) and the lower flange (4), connecting members - slot strips (18) and web strips (19) - configured so as to be complementary to one another, and are connected by the connecting members engaged with one another by the cold joining process, so as to form a base plate (7, 7.1), of which profiles (2, 2.1) at least a plurality have, between their upper flange (3) and their lower flange (4), at least one usable chamber (14) for accommodating at least one unit necessary for the operation of the vehicle, and on each longitudinal side comprising the end sides of the profiles (2, 2.1) a sillboard (8, 9) which extends over the length of the base plate (7, 7.1) formed by the profiles (2, 2.1) and is supported on the end surfaces of the profiles (2, 2.1).

2. Understructure according to claim 1, **characterised in that** the understructure (1) comprises connecting means for the connecting of further vehicle components, such as wheel suspensions, a steering device, and/or axle supports.

3. Understructure according to claim 1 or 2, **characterised in that** seating rails are anchored on the upper flange of the understructure.

4. Understructure according to any one of claims 1 to 3, **characterised in that** the understructure is provided with a line guidance channel for accommodating lines opening into the usable chamber, in particular electrical lines.

5. Understructure according to any one of claims 1 to 4, **characterised in that** the profiles (2.1) are multi-chambered profiles, wherein, due to the chambering arrangement, between the upper flange (3) and the lower flange (4) at least two chambers are provided, extending between two webs (5.1, 6.1) connecting the upper flange (3) and the lower flange (4), and separated by a base (19).

6. Understructure according to claim 5, **characterised in that** one of the two chambers opens at each profile end into a collector connected to it, which collector can be connected to a coolant circuit, and the other chamber serves to accommodate at least one unit which is to be cooled, in particular at least one battery or at least one battery module.

7. Understructure according to any one of claims 1 to 6, **characterised in that** the two webs of a profile, connecting the upper flange with the lower flange, carry on their sides facing one another in each case at least one web which projects and is arranged at the same distance interval from the upper flange.

8. Understructure according to any one of claims 1 to 7, **characterised in that** the sillboards (8,9) are configured in particular as crash elements manufactured from an aluminium alloy.

9. Understructure according to any one of claims 1 to 8, **characterised in that** at least one of the sillboards (8, 9) can be removed from the base plate (7, 7.1) in order to provide access to the usable chamber (14) of the profiles (2, 2.1), or can be adjusted in relation to this, in particular by being pivoted.

10. Understructure according to any one of claims 1 to 9, **characterised in that** the light-metal extruded profiles (2, 2.1) are manufactured from an aluminium alloy.

11. Vehicle with an understructure according to any one of claims 1 to 10, **characterised in that** the vehicle comprises an electric drive, and the usable chambers (14) of the profiles (2, 2.1) are equipped with the batteries (15) necessary for the operation of the electric motor(s).

12. Vehicle according to claim 11, **characterised in that** the batteries (15) accommodated in the usable chambers (14) are cooled.

13. Vehicle according to claim 12, **characterised in that** the understructure (1) is connected to a coolant circuit, wherein the coolant is conveyed in the coolant circuit by an electric pump.

## Revendications

1. Ensemble autoporteur pour un véhicule comprenant une multitude de profilés filés à âme creuse en métal léger, liés les uns aux autres du côté longitudinal par complémentarité de forme et adhérence par un procédé d'assemblage à froid, présentant respectivement une semelle supérieure (3) et une semelle inférieure (4) liée à la précédente par des montants (5, 6 ; 5.1, 6.1), les profilés adjacents (2, 2.1) présentant aux extrémités longitudinales de la semelle supérieure (3) et de la semelle inférieure (4) des éléments de liaison - des rainures (18) et des languettes (19) - conformés de manière complémentaire les uns par rapport aux autres et étant reliés les uns aux autres grâce aux éléments de liaison engagés les uns dans les autres par un procédé d'assemblage à froid afin de former un plateau (7, 7.1) de base, parmi lesquels profilés (2, 2.1) au moins une majorité présentent un compartiment fonctionnel (14) entre leur semelle supérieure (3) et leur semelle inférieure (4) afin d'y loger au moins un sous-groupe indispensable au fonctionnement du véhicule, et, respectivement, un seuil (8, 9) sur chaque côté longitudinal présentant la face frontale des profilés (2, 2.1) s'étendant respectivement le long du plateau (7, 7.1) de base formé par les profilé (2, 2.1) et s'appuyant sur les faces frontales des profilés (2, 2.1).

2. Ensemble selon la revendication 1, **caractérisé en ce que** l'ensemble (1) présente des moyens de liaison afin de raccorder d'autres composants d'un véhicule, par exemple des suspensions, une direction et/ou des supports d'essieu.

3. Ensemble selon la revendication 1 ou 2, **caractérisé en ce que** des rails de siège sont ancrés sur la semelle supérieure du plateau de base.

4. Ensemble selon l'une des revendications 1 à 3, **caractérisé en ce que** l'ensemble dispose d'une goulotte de guidage de câbles afin d'y loger les câbles, notamment électriques, débouchant dans les compartiments fonctionnels.

5. Ensemble selon l'une des revendications 1 à 4, **caractérisé en ce que** les profilés (2.1) sont des profilés à plusieurs compartiments, grâce à laquelle compartimentation entre la semelle supérieure (3) et la semelle inférieure (4) sont prévus au moins deux compartiments séparés par un fond (19) et s'étendant entre deux montants (5.1, 6.1) reliant la semelle supérieure (3) avec la semelle inférieure (4).

6. Ensemble selon la revendication 5, **caractérisé en ce que** l'un des deux compartiments débouche à chaque extrémité de profilé dans un collecteur fixé sur celle-ci, lequel collecteur peut être raccordé à un circuit de liquide de refroidissement, et l'autre compartiment sert à y loger au moins un sous-groupe à refroidir, notamment au moins une batterie ou au moins un module de batterie.

7. Ensemble selon l'une des revendications 1 à 6, **caractérisé en ce que** les deux montants d'un profilé reliant la semelle supérieure et la semelle inférieure supportent, sur leurs faces orientées l'une vers l'autre, au moins un montant en saillie sur celles-ci et disposé à la même distance de la semelle supérieure.

8. Ensemble selon l'une des revendications 1 à 7, **caractérisé en ce que** les seuils (8, 9) sont conformés en éléments de crash fabriqués notamment à partir d'un alliage d'aluminium.

9. Ensemble selon l'une des revendications 1 à 8, **caractérisé en ce que,** dans le but de réaliser un accès aux compartiments fonctionnels (14) des profilés (2, 2.1), au moins un des seuils (8, 9) du plateau (7, 7.1) de base peut être retiré ou qu'il est réglable par rapport aux précédents, qu'il est notamment basculant.

10. Ensemble selon l'une des revendications 1 à 9, **caractérisé en ce que** les profilés (2, 2.1) filés en métal léger sont fabriqués à partir d'un alliage d'aluminium.

11. Véhicule avec un ensemble selon l'une des revendications 1 à 10, **caractérisé en ce que** le véhicule présente un entraînement électrique et que les compartiments fonctionnels (14) des profilés (2, 2.1) sont équipés des batteries (15) nécessaires au fonctionnement du ou des moteurs électriques.

12. Véhicule selon la revendication 11, **caractérisé en ce que** les batteries (15) logées dans les compartiments fonctionnels (14) sont refroidies.

13. Véhicule selon la revendication 12, **caractérisé en ce que** l'ensemble (1) est raccordé à un circuit de liquide de refroidissement, le liquide de refroidissement circulant grâce à une pompe électrique dans un circuit de liquide de refroidissement.
